# FASCICULE DE BREVET EUROPEEN

(11) **EP 0 895 579 B1**
(45) Date de publication et mention de la délivrance du brevet: **20.03.2002**
(21) Numéro de dépôt: 97920794.1
(22) Date de dépôt: 21.04.1997
(51) Int. Cl.: G01D 13/22, G01D 13/06, G01D 5/12

(54) **INDICATEUR POUR TABLEAU DE BORD DE VEHICULE AUTOMOBILE**
ANZEIGEGERÄT FÜR KRAFTFAHRZEUGARMATURENBRETT
MOTOR VEHICLE DASHBOARD INDICATOR

(30) Priorité: 23.04.1996 FR 9605093
(43) Date de publication de la demande: 10.02.1999
(73) Titulaire: MAGNETI MARELLI FRANCE, 92000 Nanterre (FR)
(72) Inventeur: ANDRAULT, Guy, F-95100 Argenteuil (FR); BOUCLY, Bernard, 78800 Versailles (FR); GUIBERT, Michel, F-75019 Paris (FR); LE GAL, Michel, F-60110 Meru-sur-Oise (FR); BEZARD, Jean-Jacques, F-78400 Chatou (FR); CZEPCZAK, Rapha[l, F-91310 Linas (FR); GUIRAUTON, Pascal, F-95370 Montigny-les-Cormeilles (FR); WATERNAUX, Bernard, F-95460 Sarcelle-Village (FR)
(74) Mandataire: Texier, Christian
(86) Numéro de dépôt international: FR9700712
(87) Numéro de publication internationale: WO9740347

(56) Documents cités:
- EP-A- 0 678 734
- DE-A- 2 315 395
- DE-A- 2 829 861
- FR-A- 1 234 826
- FR-A- 2 551 602
- GB-A- 1 396 236
- US-A- 3 480 861
- US-A- 4 163 428

## Description

La présente invention concerne le domaine des indicateurs pour tableaux de bord de véhicules automobiles.

De nombreux indicateurs pour tableaux de bord de véhicules automobiles ont déjà été proposés.

La plupart des indicateurs utilisés de nos jours sont formés d'indicateurs statiques type afficheurs à cristaux liquides ou d'indicateurs dynamiques comprenant une aiguille entraînée par un moyen moteur, tel qu'un logomètre ou un moteur pas à pas.

Le document DE-A-2315395 décrit un indicateur comprenant un boîtier muni d'une fenêtre et équipé d'une bande souple entraînée par un moteur via un système d'engrenage.

Le document FR-A-1234826 décrit un indicateur comprenant une bande sans fin montée sur deux galets, laquelle bande porte un prisme à réflexion totale au niveau d'une fenêtre de lecture.

La présente invention a maintenant pour but de perfectionner les indicateurs connus.

Ce but est atteint selon la présente invention grâce à un indicateur pour tableau de bord de véhicule automobile comprenant :
- un boitier,
- un guide formé dans le boitier selon un trajet déterminé,
- un élément souple placé à déplacement longitudinal dans le guide, lequel élément souple porte un repère, et
- au moins un moyen moteur apte à controler les déplacements de l'élément souple dans le guide, pour modifier la position du repère,
le repère étant formé d'un index pourvu d'une source lumineuse à commande électrique.

Selon une autre caractéristique avantageuse de la présente invention, la source lumineuse est alimentée par l'intermédiaire de conducteurs électriques qui cheminent le long de l'élément souple.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente une vue de face avant schématique d'un indicateur conforme à la présente invention,
- la figure 2 représente une vue schématique en perspective éclatée partielle de cet indicateur,

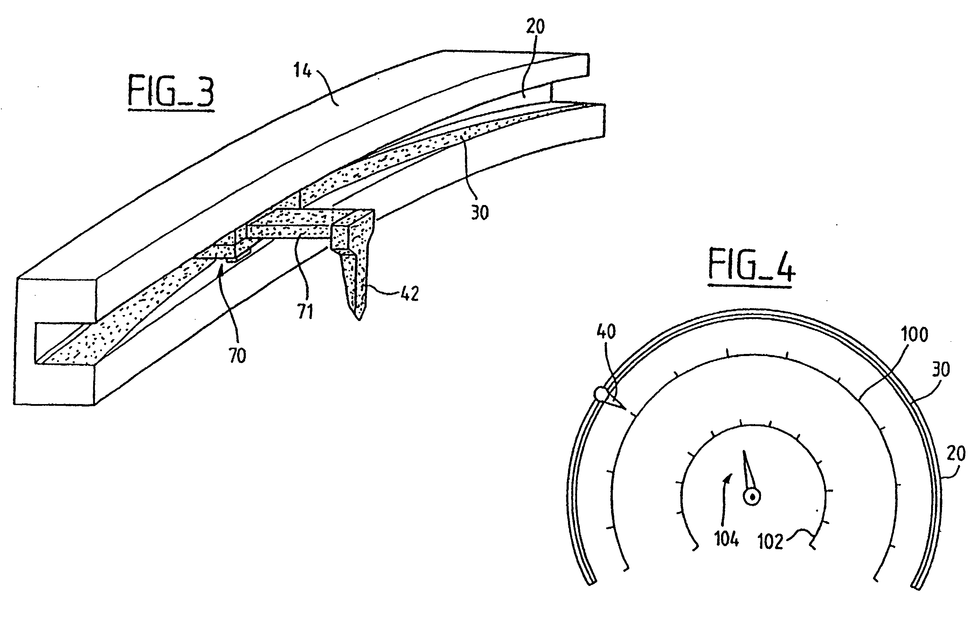

- la figure 3 représente une vue partielle en perspective du même indicateur, et

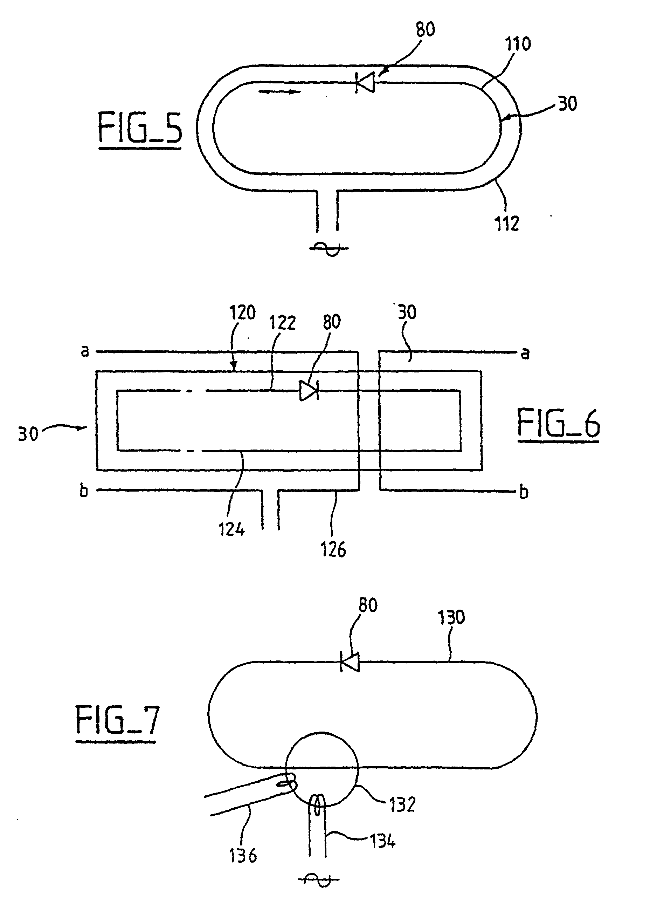

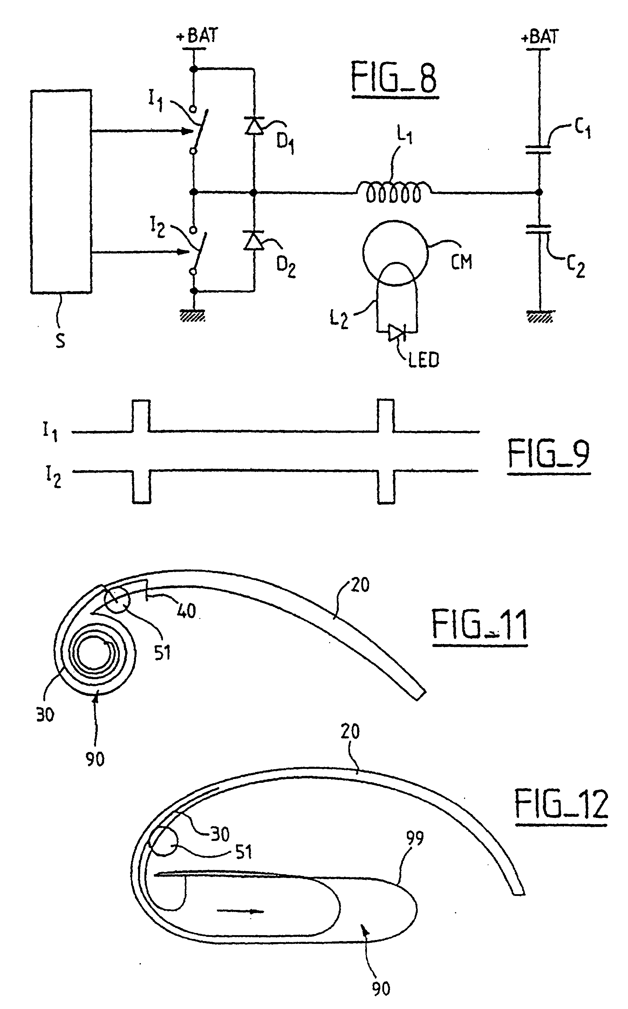

- les figures 4 à 12 illustrent diverses variantes conformes à l'invention.

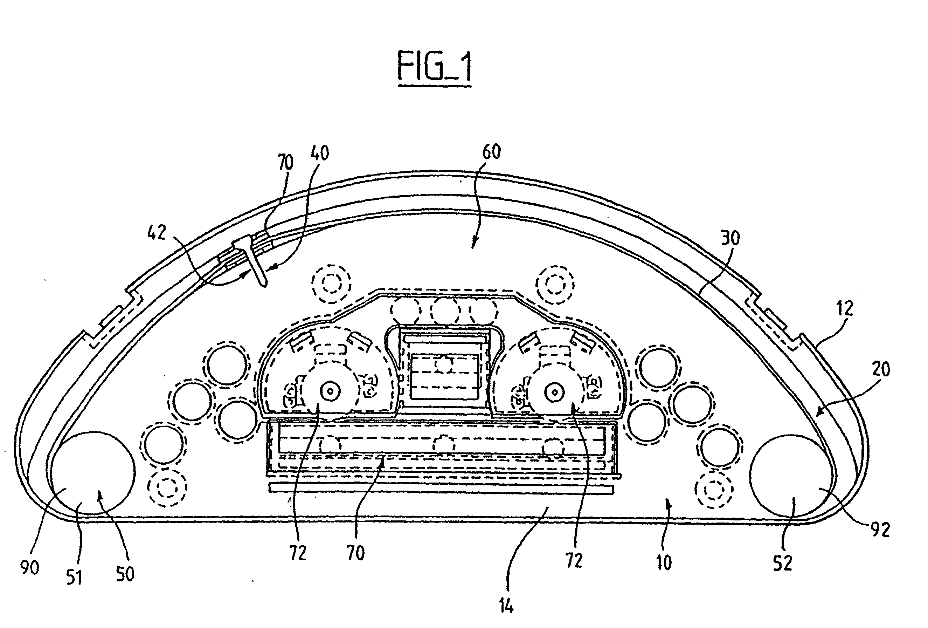

On a schématisé sur la figure 1 un indicateur comprenant un boîtier 10 dans lequel est formé un guide 20 selon un trajet déterminé, un élément souple 30 placé à déplacement longitudinal dans le guide 20, un repère 40 porté par l'élément souple 30, et au moins un moyen moteur 50 apte à controler les déplacements de l'élément souple 30 dans le guide 20, pour modifier la position du repère 40.

Le boîtier 10 peut faire l'objet de nombreux modes de réalisation. Il peut être formé par l'assemblage de différentes pièces réalisées par exemple par moulage en matière plastique.

De préférence ce boitier 10 comprend un cadre 12 qui porte au moins une plaque centrale plane 14 dans laquelle est ménagée le guide 20.

Le guide 20 est formé avantageusement d'une gorge incurvée ménagée dans la plaque 14.

Selon le mode de réalisation préférentiel illustré sur la figure 1, le guide 20 a la forme d'un secteur de couronne sensiblement cylindrique, à concavité dirigée vers le bas, au moins sensiblement symétrique par rapport à un plan vertical.

Il est ainsi formé dans l'espace délimité par le guide 20, une zone 60 susceptible de recevoir des indicateurs additionnels 70, 72 tels qu'un afficheur 70 à cristaux liquides et des afficheurs 72 à aiguille entraînée par un logomètre ou un moteur pas à pas.

L'élément souple 30 est constitué de préférence d'un ruban en matériau non élastique électriquement isolant engagé par un bord longitudinal dans le guide 20.

Le repère 40 peut également faire l'objet de nombreux modes de réalisation. Il peut s'agir d'un simple marquage, par exemple sous forme d'une pastille de couleur, placé sur le ruban 30.

Cependant de préférence, le repère 40 est formé d'un index 42 rapporté sur le ruban 30.

L'index 42 peut être fixé sur le ruban 30 par tous moyens appropriés. De préférence il est fixé, par exemple par encliquetage, sur un chariot 70 rapporté sur le ruban 30. Le chariot 70 est formé avantageusement de deux pièces 72, 74 disposées respectivement de part et d'autre du ruban 30 et fixées également entre elles, par exemple par encliquetage.

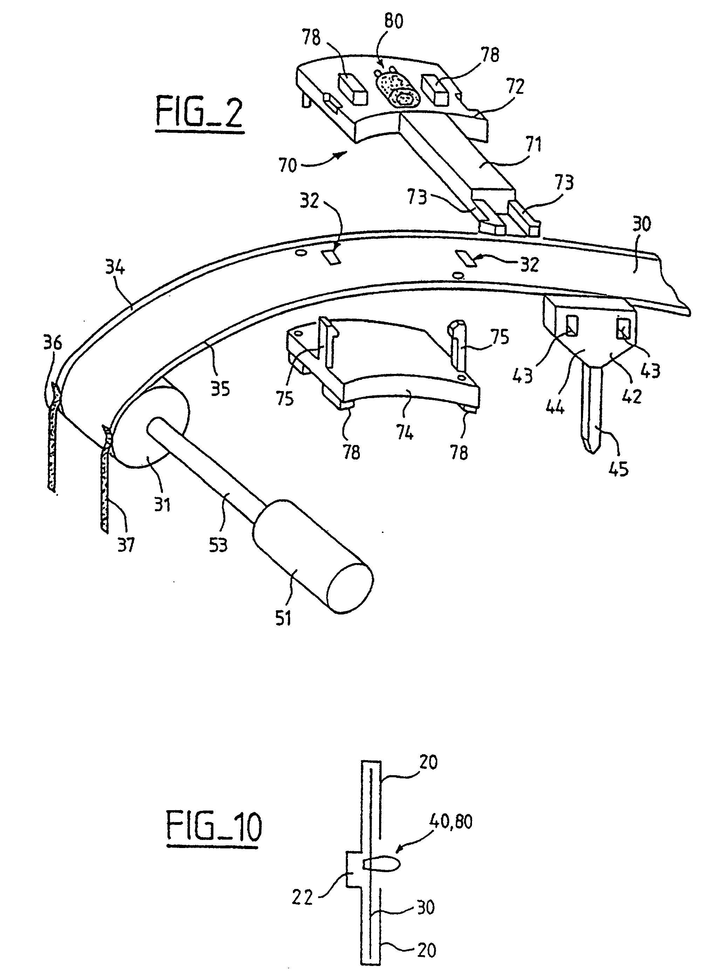

Sur la figure 2 on a schématisé en 73 des languettes à denture prévues sur la pièce 72 et destinées à être encliquetées dans des logements complémentaires 43 l'index 42, et en 75 des languettes à denture prévues sur la pièce 74 et destinées à être encliquetées sur la pièce 72.

Les languettes 73 s'étendent parallèlement au plan du ruban 30 sur l'extrémité d'une poutre 71 elle même parallèle au plan du ruban 30, solidaire de la pièce 72.

Les languettes 75 s'étendent quant à elles transversalement au plan du ruban 30 et traversent des fenêtres 32 ménagées dans ce ruban 30 pour venir en prise avec la pièce 72.

L'index 42 comporte une base 44 comportant les logements 43 et une pointe effilée 45 perpendiculaire au plan du ruban 30.

De préférence l'index 42 est formé en un matériau plastique transparent ou translucide de sorte que cet index 42 peut jouer le rôle de guide optique et il est adapté pour être éclairée par une source lumineuse 80 à commande électrique portée par la pièce 72.

La source lumineuse 80 est alimentée par l'intermédiaire de conducteurs électriques 34, 35 qui cheminent le long de l'élément souple 30.

Les conducteurs électriques 34 et 35 sont eux mêmes reliés à une source d'alimentation électrique contrôlée par tous moyens appropriés, tels que par exemple par des lames ressort ou frotteurs 36, 37 comme illustré sur la figure 2 ou par des moyens équivalents, tels que des spiraux.

La source lumineuse 80 peut être formée par exemple d'une diode électroluminescente à semiconducteurs ou à matériau polymère, ou de tous moyens équivalents.

Les moyens moteurs 50 peuvent faire l'objet de nombreux modes de réalisation.

Il s'agit de préférence d'au moins un moteur pas à pas.

Plus précisément de préférence dans le cadre de la présente invention, le ruban 30 a ses deux extrémités qui émergent respectivement aux extrémités du guide 20 et associées à des moteurs 51 et 52 respectifs.

Le sens de rotation de ces moteurs 51, 52 est inversé pour entrainer le ruban 30 et l'index 40 associé, alternativement dans un sens et dans l'autre. Ainsi en permanence l'un des deux moteurs 51, 52 tire le ruban 30, tandis que l'autre moteur pousse celui-ci. En veillant à imposer une légère vitesse différentielle entre les deux moteurs 51, 52, celui qui tire le ruban 30 étant piloté à une vitesse légèrement supérieure à celle du moteur qui pousse, on garantit que le ruban 30 soit toujours maintenu dans un état parfaitement tendu, exempt de circonvolution à l'intérieur du guide 20.

En pratique, les extrémités du ruban 30 peuvent être enroulées en spirale dans des réserves respectives 90, 92 associées aux moteurs respectifs 51, 52.

Comme illustré sur la figure 2, les moteurs pas à pas 51, 52 peuvent être disposés à l'extérieur des réserves 90, 92 et reliés au moyeu 31 sur lequel est enroulé une extrémité du ruban 30 par un arbre coaxial 53, le moteur 51 étant lui même coaxial du moyeu 31.

En variante, les moteurs 51 et 52 peuvent être placés à l'extérieur des réserves 90, 92, non coaxialement aux moyeux 31 et reliés fonctionnellement à ceux-ci par tous moyens appropriés, tels que par exemple par un train d'engrenages.

Selon encore une autre variante de réalisation, considérée comme préférentiel, les moteurs 51 et 52 sont placés à l'intérieur du moyeu 31 et reliés directement à celui-ci, ou indirectement par l'intermédiaire d'un train d'engrenages.

De façon typique mais non limitative le diamètre extérieur d'une réserve 90, 92 est de l'ordre de 45mm, le diamètre du moyeu 31 sur lequel est fixée l'extrémité du ruban 30 et qui loge un moteur pas à pas étant de l'ordre de 20 mm.

Bien entendu la présente invention n'est pas limitée aux modes de réalisation qui viennent d'être décrits, mais s'étend à toutes variantes conformes à l'étendu de la protection définie par les revendications.

Ainsi par exemple, on peut envisager de remplacer le ruban en boucle ouverte 30 illustré sur les figures annexées par un ruban en boucle fermée ou bande sans fin. Il convient dans ce cas de prolonger le guide 20 de sorte que celui-ci définisse lui même un trajet en boucle fermée de même longueur que ce ruban 30.

Les moyens moteurs 50 peuvent en variante être formés de tous moyens équivalents à ceux précédemment décrits, tels que par exemple des courroies en contact avec le ruban 30 et elles mêmes entraînées par des moteurs appropriés.

On peut également envisager, que le ruban 30 soit agencé en boucle ouverte ou en boucle fermée, d'entraîner celui-ci grâce à un moteur unique commandé alternativement dans un sens ou dans l'autre pour assurer le déplacement recherché du ruban 30. Il convient dans ce cas de veiller à assurer un guidage étroit du ruban 30 dans le guide 20.

La géométrie du guide 30 illustrée sur les figures annexées n'est bien entendu aucunement limitative. En pratique le guide 30 pourra présenter une très grande variété de configuration, éventuellement avec point d'inflexion.

Lorsque le repère 40 est formé d'un index 42 rapporté sur le ruban 30, de préférence le guidage de l'élément mobile dans le guide 20 est assuré par des patins 78 prévus sur les pièces 72, 74 assurant la fixation de l'index 42. Il peut s'agir par exemple et non limitativement de patins 78 en polytétrafluoroéthylène. Les patins 78 définissent alors un encombrement en épaisseur du chariot 70 composé par les pièces 72 et 74, qui est complémentaire de la largeur du guide 20.

Cependant en variante on peut envisager d'assurer directement le guidage du ruban 30 lui même dans le guide 20. Pour cela la largeur du guide 20 doit être complémentaire de l'épaisseur du ruban 30.

Le ruban 30 peut être muni de perforations régulièrement réparties sur sa longueur, en prise avec les dents d'un pignon moteur. Dans ce cas de préférence, il est prévu une plaque qui appuie le ruban sur le diamètre primitif des dents pour éviter tout jeu néfaste. Les perforations précitées peuvent prendre de nombreuses configurations appropriées.

Selon le mode de réalisation précédemment décrit le ruban 30 est guidé par un bord longitudinal dans un guide 20 unique. Cependant en variante, on peut envisager de prévoir deux guides 20 en regard et de même configuration, recevant respectivement les deux bords du ruban 30 pour améliorer le guidage de celui-ci. Dans ce cas, le repère ou index 40 est relié au ruban 30 dans la partie médiane, en largeur de celui-ci.

Selon le mode de réalisation précédemment décrit, le guide 20 est formé d'une gorge en creux. Cependant en variante, on peut envisager de réaliser le guide 20 sous forme d'une nervure en saillie assurant le guidage de moyens de section complémentaire, solidaires du ruban 30.

Il peut être prévu un guide additionnel sur la pièce 72 pour guider la lumière de la source 80 vers l'index 42.

Le chariot 70 peut être muni de galets roulant sur les faces du guide 20.

Selon encore une autre variante, le chariot 70 peut être dépourvu de source lumineuse, l'éclairage de l'index pouvant être assuré par exemple par une source externe solidaire du boîtier 10.

Le chariot 70 peut être muni d'au moins deux sources lumineuses de couleurs différentes alimentées sélectivement pour modifier la couleur de l'index 40 lorsque par exemple, le repère dépasse une valeur seuil dans son déplacement dans le guide 20 ( par exemple le franchissement d'une vitesse prédéterminée de déplacement pour le véhicule ).

Bien entendu la plaque 14 porte un cadran muni d'au moins une échelle de valeurs, le long du guide 20 en regard du trajet de déplacement du repère 40.

La présente invention présente notamment les avantages suivants.

L'utilisation d'un indicateur formé d'un ruban 30 monté à déplacement longitudinal sur un guide 20 permet une très grande variété de configuration de déplacement du repère 40 par simple adaptation de la géométrie du guide 20. On peut par exemple envisager de faire suivre à l'index 42 un trajet en "S" pour tenir compte de l'implantation des autre indicateurs à aiguille ou à cristaux liquides dans le tableau de bord.

L'indicateur à ruban 30 conforme à la présente invention est peu encombrant en largeur.

L'indicateur à ruban 30 conforme à la présente invention permet une grande amplitude de déplacement pour le repère 40 et par conséquent une information aisément perceptible pour l'utilisateur.

La présente invention permet de déplacer un index 40 selon une disposition constamment transversale au guide 20, et par conséquent pour un guide 20 de géométrie cylindrique, d'orientation constamment radiale par rapport au centre fictif du guide 20, sans exiger de moyens moteurs au niveau de ce centre fictif. La présente invention permet ainsi de libérer la place au niveau de l'espace délimité par le guide 20, pour d'autres afficheurs 70, 72. La présente invention permet également d'utiliser un guide 20 de grand rayon correspondant à un centre fictif situé à l'extérieur du tableau de bord.

## Revendications

1. Indicateur pour tableau de bord de véhicule automobile comprenant :
- un boîtier (10),
- un guide (20) formé dans le boitier (10) selon un trajet déterminé,
- un élément souple (30) placé à déplacement longitudinal dans le guide (20), lequel élément souple (30) porte un repère (40), et
- au moins un moyen moteur (50) apte à controler les déplacements de l'élément souple (30) dans le guide (20), pour modifier la position du repère (40), **caractérisé en ce que**
le repère (40) est formé d'un index (42) pourvu d'une source lumineuse (80) à commande électrique.

2. Indicateur selon la revendication 1, **caractérisé par le fait que** la source lumineuse (80) est alimentée par l'intermédiaire de conducteurs électriques (34, 35) qui cheminent le long de l'élément souple (30).

3. Indicateur selon l'une des revendications 1 ou 2, **caractérisé par le fait que** le guide (20) est formé d'une gorge.

4. Indicateur selon l'une des revendications 1 ou 2, **caractérisé par le fait que** le guide (20) est formé d'une nervure en saillie.

5. Indicateur selon l'une des revendications 1 à 4, **caractérisé par le fait que** le guide (20) a la forme d'un secteur de couronne sensiblement cylindrique, à concavité dirigée vers le bas, au moins sensiblement symétrique par rapport à un plan vertical.

6. Indicateur selon l'une des revendications 1 à 5, **caractérisé par le fait que** l'espace circonscrit par le guide (20) reçoit des indicateurs additionnels (70, 72) tels qu'un afficheur (70) à cristaux liquides et des afficheurs (72) à aiguille entraînée par un logomètre ou un moteur pas à pas.

7. Indicateur selon l'une des revendications 1 à 6, **caractérisé par le fait que** l'élément souple (30) est constitué d'un ruban en matériau non élastique.

8. Indicateur selon l'une des revendications 1 à 7, **caractérisé par le fait que** l'élément souple (30) est réalisé en matériau électriquement isolant.

9. Indicateur selon l'une des revendications 1 à 8, **caractérisé par le fait que** l'élément souple (30) est engagé par un bord longitudinal dans le guide (20).

10. Indicateur selon l'une des revendications 1 à 9, **caractérisé par le fait qu'**il comprend deux guides (20) en regard et de même configuration, recevant respectivement les deux bords de l'élément souple (30) pour améliorer le guidage de celui-ci, le repère (40) étant relié à l'élément souple (30) dans la partie médiane, en largeur de celui-ci.

11. Indicateur selon l'une des revendications 1 à 10, **caractérisé par le fait que** l'index (42) est fixé sur un chariot (70) rapporté sur l'élément souple (30).

12. Indicateur selon la revendication 11, **caractérisé par le fait que** le chariot (70) est formé de deux pièces (72, 74) disposées respectivement de part et d'autre de l'élément souple (30) et fixées également entre elles, par exemple par encliquetage.

13. Indicateur selon l'une des revendications 1 à 12, **caractérisé par le fait que** le repère (40) est constitué d'un index (42) formé en un matériau plastique transparent ou translucide de sorte que cet index (42) joue le rôle de guide optique.

14. Indicateur selon la revendication 2, **caractérisé par le fait que** les conducteurs électriques (34 et 35) sont eux mêmes reliés à une source d'alimentation électrique controlée, par exemple par des lames ressort ou frotteurs (36, 37) ou par des moyens équivalents, tels que des spiraux.

15. Indicateur selon l'une des revendications 1 à 14 **caractérisé par le fait que** la source lumineuse (80) est choisie dans le groupe comprenant une diode électroluminescente à semiconducteurs ou à matériau polymère.

16. Indicateur selon l'une des revendications 1 à 15, **caractérisé par le fait que** le moyen moteur comprend au moins un moteur pas à pas (50).

17. Indicateur selon l'une des revendications 1 à 16, **caractérisé par le fait que** l'élément souple (30) a ses deux extrémités qui émergent respectivement aux extrémités du guide (20) et associées à des moteurs (51, 52) respectifs.

18. Indicateur selon la revendication 17, **caractérisé par le fait qu'**il comprend des moyens aptes à imposer une légère vitesse différentielle entre les deux moteurs (51, 52), celui qui tire l'élément souple (30) étant piloté à une vitesse légèrement supérieure à celle du moteur qui pousse.

19. Indicateur selon l'une des revendications 1 à 18, **caractérisé par le fait que** les extrémités de l'élément souple (30) sont enroulées en spirale dans des réserves respectives (90, 92) associées à des moteurs respectifs (51,52).

20. Indicateur selon l'une des revendications 1 à 19, **caractérisé par le fait que** des moteurs (51, 52) sont placés à l'intérieur d'un moyeu (31) et reliés directement à celui-ci, ou indirectement par l'intermédiaire d'un train d'engrenages.

21. Indicateur selon l'une des revendications 1 à 20, **caractérisé par le fait que** l'élément souple est formé d'un ruban en boucle ouverte (30).

22. Indicateur selon l'une des revendications 1 à 20, **caractérisé par le fait que** l'élément souple (30) est formé d'un ruban en boucle fermée ou bande sans fin.

23. Indicateur selon l'une des revendications 1 à 22, **caractérisé par** lé fait que le guidage de l'élément mobile dans le guide (20) est assuré par des patins (78) prévus sur des pièces (72, 74) assurant la fixation de l'index (42).

24. Indicateur selon l'une des revendications 1 à 23, **caractérisé par le fait que** l'élément souple (30) est guidé directement dans le guide (20).

25. Indicateur selon l'une des revendications 1 à 24, **caractérisé par le fait que** l'élément souple (30) est muni de perforations régulièrement réparties sur sa longueur, en prise avec les dents d'un pignon moteur.

26. Indicateur selon la revendication 25, **caractérisé par le fait qu'**une plaque appuie l'élément souple (30) sur le diamètre primitif des dents pour éviter tout jeu néfaste.

27. Indicateur selon l'une des revendications 1 à 26, **caractérisé par le fait qu'**un chariot (70) placé sur l'élément souple (30) est muni d'au moins deux sources lumineuses de couleurs différentes alimentées sélectivement pour modifier la couleur de l'index (42).

28. Indicateur selon l'une des revendications 1 à 27, **caractérisé par le fait qu'**un cadran muni d'au moins une échelle de valeurs est prévu le long du guide (20) en regard du trajet de déplacement du repère (40).

29. Indicateur selon l'une des revendications 1 à 28, **caractérisé par le fait qu'**il est adapté pour déplacer l'index (42) selon une disposition constamment transversale au guide (20).

30. Indicateur selon l'une des revendications 1 à 29, **caractérisé par le fait qu'**il comprend un guide (20) de géométrie cylindrique adapté pour maintenir l'index (42) dans une orientation constamment radiale par rapport au centre fictif du guide (20).

31. Indicateur selon l'une des revendications 1 à 30, **caractérisé par le fait qu'**il comprend un guide (20) de grand rayon correspondant à un centre fictif situé à l'extérieur du tableau de bord.

## Claims

1. An indicator for a motor vehicle dashboard, the indicator comprising:
. a housing (10);
. a guide (20) formed along a determined path inside the housing (10);
. a flexible element (30) placed to move longitudinally in the guide (20), which flexible element (30) carries a marker (40); and
. at least one drive means (50) suitable for controlling the displacements of the flexible element (30) in the guide (20) to modify the position of the marker (40),
the indicator being **characterized in that** the marker (40) is formed by a pointer (42) provided with an electrically-controlled light source (80).

2. An indicator according to claim 1, **characterized by** the fact that the light source (80) is powered via electrical conductors (34, 35) extending along the flexible element (30).

3. An indicator according to claim 1 or claim 2, **characterized by** the fact that the guide (20) is formed by a groove.

4. An indicator according to claim 1 or claim 2, **characterized by** the fact that the guide (20) is formed by a projecting rib.

5. An indicator according to any one of claims 1 to 4, **characterized by** the fact that the guide (20) is in the form of a sector of a substantially cylindrical ring, with its concave side facing downwards, at least substantially symmetrically about a vertical plane.

6. An indicator according to any one of claims 1 to 5, **characterized by** the fact that the space circumscribed by the guide (20) receives additional indicators (70, 72) such as a liquid crystal display (70) and gauges (72) each having a needle driven by a ratio meter or a stepper motor.

7. An indicator according to any one of claims 1 to 6, **characterized by** the fact that the flexible element (30) is constituted by a tape of non-elastic material.

8. An indicator according to any one of claims 1 to 7, **characterized by** the fact that the flexible element (30) is made of an electrically insulating material.

9. An indicator according to any one of claims 1 to 8, **characterized by** the fact that the flexible element (30) is engaged in the guide (20) via a longitudinal edge.

10. An indicator according to any one of claims 1 to 9, **characterized by** the fact that it comprises two guides (20) facing each other and having the same configuration, the guides receiving respective ones of the two edges of the flexible element (30) to improve guidance thereof, the marker (40) being connected to the flexible element (30) in the middle portion thereof, widthwise.

11. An indicator according to any one of claims 1 to 10, **characterized by** the fact that the pointer (42) is fixed on a carriage (70) fitted to the flexible element (30).

12. An indicator according to claim 11, **characterized by** the fact that the carriage (70) is made of two parts (72, 74) placed on respective sides of the flexible element (30) and fixed to each other, e.g. by snap fastening.

13. An indicator according to any one of claims 1 to 12, **characterized by** the fact that the marker (40) is constituted by a pointer (42) made of a transparent or translucent plastics material such that said pointer (42) acts as a light guide.

14. An indicator according to claim 2, **characterized by** the fact that the electrical conductors (34 and 35) are themselves connected to a controlled electrical power supply, e.g. via spring blades or wipers (36, 37) or via equivalent means such as spirals.

15. An indicator according to any one of claims 1 to 14, **characterized by** the fact that the light source (80) is selected from the group comprising a semiconductor or a polymer material light-emitting diode.

16. An indicator according to any one of claims 1 to 15, **characterized by** the fact that the drive means comprise at least one stepper motor (50).

17. An indicator according to any one of claims 1 to 16, **characterized by** the fact that the flexible element (30) has two ends which emerge respectively from the ends of the guide (20) and which are associated with respective motors (51, 52).

18. An indicator according to claim 17, **characterized by** the fact that it comprises means suitable for imposing a small speed differential between the two motors (51, 52) with the motor pulling the flexible element (30) being controlled to run at a speed that is slightly faster than that of the motor that is pushing it.

19. An indicator according to any one of claims 1 to 18, **characterized by** the fact that the ends of the flexible element (30) are spiral-wound in respective stores (90, 92) associated with the respective motors (51, 52).

20. An indicator according to any one of claims 1 to 19, **characterized by** the fact that each motor (51, 52) is placed inside a respective hub (31) and is connected thereto either directly or indirectly via a gear train.

21. An indicator according to any one of claims 1 to 20, **characterized by** the fact that the flexible element is formed by an open loop tape (30).

22. An indicator according to any one of claims 1 to 20, **characterized by** the fact that the flexible element (30) is formed by a closed-loop tape or endless band.

23. An indicator according to any one of claims 1 to 22, **characterized by** the fact that the moving element is guided in the guide (20) by shoes (78) provided on parts (72, 74) for fixing the pointer (42).

24. An indicator according to any one of claims 1 to 23, **characterized by** the fact that the flexible element (30) is guided directly in the guide (20).

25. An indicator according to any one of claims 1 to 24, **characterized by** the fact that the flexible element (30) is provided with perforations that are regularly distributed along its length, meshing with the teeth of a driving gearwheel.

26. An indicator according to claim 25, **characterized by** the fact that a plate presses the flexible element (30) against the pitch circle of the teeth to avoid any harmful backlash.

27. An indicator according to any one of claims 1 to 26, **characterized by** the fact that a carriage (70) placed on the flexible element (30) is provided with at least two light sources of different colors powered selectively to modify the color of the pointer (42).

28. An indicator according to any one of claims 1 to 27, **characterized by** the fact that a dial provided with at least one scale of values is provided along the guide (20) facing the travel path of the marker (40).

29. An indicator according to any one of claims 1 to 28, **characterized by** the fact that it is adapted to move the pointer (42) so that its disposition is constantly transverse relative to the guide (20).

30. An indicator according to any one of claims 1 to 29, **characterized by** the fact that it comprises a guide (20) of cylindrical shape adapted to hold the pointer (42) in an orientation that is constantly radial relative to the geometrical center of the guide (20).

31. An indicator according to any one of claims 1 to 30, **characterized by** the fact that it comprises a guide (20) having a large radius corresponding to a geometrical center situated outside the dashboard.

## Patentansprüche

1. Anzeigegerät für Armaturenbrett in Kraftfahrzeugen mit:
- einem Gehäuse (10),
- einer gemäß einer bestimmten Bahn in dem Gehäuse (10) ausgebildeten Führung (20)
- einem biegsamen Element (30), welches in Längsverschiebung in der Führung (20) angeordnet ist, wobei das biegsame Element (30) eine Markierung (40) trägt, und
- wenigstens einer Motorvorrichtung (50), welche in der Lage ist, die Verschiebungen des biegsamen Elementes (30) in der Führung (20) zu steuern, um die Position der Markierung (40) zu verändern,
**dadurch gekennzeichnet, dass** die Markierung (40) von einem Zeiger (42) gebildet ist, der mit einer Lichtquelle (80) mit elektrischer Steuerung versehen ist.

2. Anzeigegerät gemäß Anspruch 1, **dadurch gekennzeichnet, dass** die Lichtquelle (80) mittels Drahtleitungen (34, 35) gespeist wird, welche entlang des biegsamen Elementes (30) angeordnet sind.

3. Anzeigegerät gemäß einem der Ansprüche 1 oder 2, **dadurch gekennzeichnet, dass** die Führung (20) von einer Rille gebildet ist.

4. Anzeigegerät gemäß einem der Ansprüche 1 oder 2, **dadurch gekennzeichnet, dass** die Führung (20) von einer vorspringenden Rippe gebildet ist.

5. Anzeigegerät gemäß einem der Ansprüche 1 bis 4, **dadurch gekennzeichnet, dass** die Führung (20) die Form eines praktisch zylindrischen Kranzbogenstücks mit nach unten gerichteter Konkavität aufweist, das wenigstens praktisch symmetrisch bezüglich einer vertikalen Ebene ausgebildet ist.

6. Anzeigegerät gemäß einem der Ansprüche 1 bis 5, **dadurch gekennzeichnet, dass** der von der Führung (20) eingegrenzte Raum zusätzliche Anzeigegeräte (70, 72) aufnimmt, wie ein Anzeigegerät (70) mit Flüssigkristallen und Anzeigeräte (72) mit einer Nadel, welche von einem Quotientenmesser oder einem Schrittmotor angetrieben wird.

7. Anzeigegerät gemäß einem der Ansprüche 1 bis 6, **dadurch gekennzeichnet, dass** das biegsame Element (30) aus einem Band aus nicht-elastischem Material besteht.

8. Anzeigegerät gemäß einem der Ansprüche 1 bis 7, **dadurch gekennzeichnet, dass** das biegsame Element (30) aus einem elektrisch isolierenden Material hergestellt ist:

9. Anzeigegerät gemäß einem der Ansprüche 1 bis 8, **dadurch gekennzeichnet, dass** das biegsame Element (30) mit einer Längskante in die Führung (20) eingeschoben ist.

10. Anzeigegerät gemäß einem der Ansprüche 1 bis 9, **dadurch gekennzeichnet, dass** es zwei einander gegenüberliegende Führungen (20) mit der gleichen Konfiguration aufweist, welche jeweils die beiden Kanten des biegsamen Elementes (30) aufnehmen, um dessen Führung zu verbessern, wobei die Markierung (40) mit dem biegsamen Element (30) in dem mittleren Teil bezüglich dessen Breite verbunden ist.

11. Anzeigegerät gemäß einem der Ansprüche 1 bis 10, **dadurch gekennzeichnet, dass** der Zeiger (42) auf einem auf dem biegsamen Element (30) aufgesetzten Schlitten (70) befestigt ist.

12. Anzeigegerät gemäß Anspruch 11, **dadurch gekennzeichnet, dass** der Schlitten (70) aus zwei Teilen (72, 74) besteht, die jeweils beidseits von dem biegsamen Element (30) angeordnet und ebenfalls aneinander befestigt sind, beispielsweise durch Einrasten.

13. Anzeigegerät gemäß einem der Ansprüche 1 bis 12, **dadurch gekennzeichnet, dass** die Markierung (40) von einem Zeiger (42) gebildet ist, der aus einem durchsichtigen oder lichtdurchlässigen Kunststoffmaterial besteht, so dass dieser Zeiger (42) die Rolle eines optischen Führers spielt.

14. Anzeigegerät gemäß Anspruch 2, **dadurch gekennzeichnet, dass** die Drahtleitungen (34 und 35) selbst an eine kontrollierte elektrische Versorgungsquelle beispielsweise durch Federblätter oder Schleiffedern (36, 37) oder durch äquivalente Vorrichtungen, wie Spiralen, angeschlossen sind.

15. Anzeigegerät gemäß einem der Ansprüche 1 bis 14, **dadurch gekennzeichnet, dass** die Lichtquelle (80) aus der Gruppe gewählt ist, welche eine Elektrolumineszenzelektrode mit Halbleitern oder aus Polymermaterial umfasst.

16. Anzeigegerät gemäß einem der Ansprüche 1 bis 15, **dadurch gekennzeichnet, dass** die Motorvorrichtung wenigstens einen Schrittmotor (50) umfasst.

17. Anzeigegerät gemäß einem der Ansprüche 1 bis 16, **dadurch gekennzeichnet, dass** die beiden Enden des biegsamen Elementes (30), die jeweils aus den Enden der Führung (20) herauslaufen, mit jeweiligen Motoren (51, 52) verbunden sind.

18. Anzeigegerät gemäß Anspruch 17, **dadurch gekennzeichnet, dass** es Vorrichtungen aufweist, welche in der Lage sind, eine leicht unterschiedliche Geschwindigkeit zwischen den beiden Motoren (51, 52) einzustellen, wobei derjenige, der das biegsame Element (30) zieht, mit einer etwas höheren Geschwindigkeit als derjenigen des Motors, der schiebt, gesteuert wird.

19. Anzeigegerät gemäß einem der Ansprüche 1 bis 18, **dadurch gekennzeichnet, dass** die Enden des biegsamen Elementes (30) spiralförmig in jeweiligen Lagerbehältern (90, 92) aufgerollt sind, die mit jeweiligen Motoren (51, 52) verbunden sind.

20. Anzeigegerät gemäß einem der Ansprüche 1 bis 19, **dadurch gekennzeichnet, dass** Motoren (51, 52) innerhalb einer Nabe 31 angeordnet und direkt oder indirekt mittels eines Getriebezuges mit dieser verbunden sind.

21. Anzeigegerät gemäß einem der Ansprüche 1 bis 20, **dadurch gekennzeichnet, dass** das biegsame Element aus einem Band in offener Schleife (30) besteht.

22. Anzeigegerät gemäß einem der Ansprüche 1 bis 20, **dadurch gekennzeichnet, dass** das biegsame Element (30) von einem Band in geschlossener Schleife oder einem Endlosband gebildet ist.

23. Anzeigegerät gemäß einem der Ansprüche 1 bis 22, **dadurch gekennzeichnet, dass** die Führung des beweglichen Elementes in der Führung (20) von Gleitschuhen (78) sichergestellt wird, welche auf Teilen (72, 74) vorgesehen sind, welche die Befestigung des Zeigers (42) sicherstellen.

24. Anzeigegerät gemäß einem der Ansprüche 1 bis 23, **dadurch gekennzeichnet, dass** das biegsame Element (30) direkt in der Führung (20) geführt wird.

25. Anzeigegerät gemäß einem der Ansprüche 1 bis 24, **dadurch gekennzeichnet, dass** das biegsame Element (30) mit regelmäßig über seine Länge verteilten Durchbohrungen versehen ist, die im Eingriff mit den Zähnen eines kleinen Motorzahnrades sind.

26. Anzeigegerät gemäß Anspruch 25, **dadurch gekennzeichnet, dass** eine Platte das biegsame Element (30) auf den Teilkreisdurchmesser der Zähne drückt, um jedes nachteilige Spiel zu vermeiden.

27. Anzeigegerät gemäß einem der Ansprüche 1 bis 26, **dadurch gekennzeichnet, dass** ein auf dem biegsamen Element (30) angeordneter Schlitten (70) mit wenigstens zwei Lichtquellen in unterschiedlichen Farben versehen ist, die selektiv gespeist werden, um die Farbe des Zeigers (42) zu verändern.

28. Anzeigegerät gemäß einem der Ansprüche 1 bis 27, **dadurch gekennzeichnet, dass** eine Skala, die mit wenigstens einer Werteeinteilung versehen ist, entlang der Führung (20) gegenüber der Bewegungsbahn der Markierung (40) vorgesehen ist.

29. Anzeigegerät gemäß einem der Ansprüche 1 bis 28, **dadurch gekennzeichnet, dass** es dafür eingerichtet ist, den Zeiger (42) gemäß einer konstant zu der Führung (20) querliegenden Anordnung zu verschieben.

30. Anzeigegerät gemäß einem der Ansprüche 1 bis 29, **dadurch gekennzeichnet, dass** es eine Führung (20) mit zylindrischer Geometrie umfasst, welche dafür eingerichtet ist, den Zeiger (42) in einer konstant radialen Ausrichtung bezüglich des fiktiven Mittelpunktes der Führung (20) zu halten.

31. Anzeigegerät gemäß einem der Ansprüche 1 bis 30, **dadurch gekennzeichnet, dass** es eine Führung (20) mit großem Radius entsprechend einem außerhalb des Armaturenbrettes angeordneten fiktiven Mittelpunktes umfasst.
